# EUROPEAN PATENT SPECIFICATION

(11) **EP 0 297 516 B1**
(45) Date of publication and mention of the grant of the patent: **08.03.1995**
(21) Application number: 88110320.4
(22) Date of filing: 28.06.1988
(51) Int. Cl.: H04N 1/40

(54) **Picture signal binarization system**
Bildsignalbinarisierungssystem
Système rendant un signal d'image binaire

(30) Priority: 30.06.1987 JP 164465/87
(43) Date of publication of application: 04.01.1989
(73) Proprietor: SHARP KABUSHIKI KAISHA, Osaka 545 (JP)
(72) Inventor: Katsuta, Yuji, Yamatokoriyama-shi Nara-ken (JP)
(74) Representative: TER MEER STEINMEISTER & PARTNER GbR

(56) References cited:
- EP-A- 0 024 902
- EP-A- 0 053 935
- US-A- 4 251 837
- PATENT ABSTRACTS OF JAPAN, vol. 6, no. 25 (E-94)(903) 13 February 1982 & JP-A-56 143 765 ( CANON ) 9 November 1981
- PATENT ABSTRACTS OF JAPAN, vol. 3, no. 60 (E-112)(111) 23 May 1979 & JP-A-54 038 727 ( HITASHI DENSHI ) 23 March 1979

## Description

### Background of the Invention

This invention relates to a method and a system for picture signal binarization in accordance with the precharacterizing parts of independent claims 1 and 2, respectively. Such a method and system are known from US-Patent US-A-4,251,837.

Conventionally, a multiple-tone image such as a photograph is converted to picture signals in the dither method, while a two-tone image such as a character is converted to picture signals of two grey levels.

The actual image on a document may be, however, the mixture of an image portion which should be converted to picture signal of multiple grey levels as a photograph is and an image portion which should be converted to picture signals of two grey levels as a character is. If such an image is processed in the dither method, character portions may be illegible and, if it is converted to picture signals of two grey levels, multiple-tone image portion cannot be reproduced.

The US-Patent US-A-4,251,837 describes a threshold mode switch using a reflectance difference algorithm for switching between a grey scale thresholding algorithm and black/white thresholding algorithm to enhance the quality of prints made of mixed format documents presented for copying. A function of the threshold mode switch 7 is to select one of black/white threshold circuitry and grey scale threshold circuitry and to activate it, thereby judging which of the circuitry is more appropriate to process a digitized picture signal. Thereby a differentiation between a multi-tone gradation region and and two-tone gradation region is carried out. This document does neither explicitly describe the function of the black/white threshold circuit nor disclose the function of the grey scale threshold circuit. That is, the document does not describe explicitly the nature of the processing the digitized image signal and how the processed signal is supplied to the printer. Further, the judgement whether the threshold mode switch is selecting multi-tone region or two-tone region is basically different from the selection method in the present application.

PAJ volume 6, No. 25 (E-94) (903) and JP-A-56143765 describe a processor for video signals to reproduce both half-tones and thin-lines by performing the dither processing of the video signal by a dither processing circuit. This dither processing circuit performs the dither process to obtain a binary image signal. This known circuit further includes an emphasizing circuit for emphasizing the contour of the video signal. Thereby, according to the known processor, a thin line is reproduced clearly, gradation is reproduced in a region other than the contour of the video signal by giving priority to the output of the emphasizing circuit over the output of the dither processing circuit.

Accordingly, an object of the present invention is to provide a picture signal binarization method and system capable of converting both multiple-tone portion and two-tone portion of an image into picture signals if accurate grey levels.

The above object is solved in accordance with the characterizing portions of the independent claims 1 and 2, respectively.

According to an essential feature of the invention, the method is characterized by comprising the steps of
- computing the mean density value of a specified number of picture points in a predetermined range of an image around a particular picture point to be converted;
- a first judging step for judging on the basis of the computed mean density value and the digitized density value of the particular picture point whether or not said density value of the particular picture point is larger than a first value, said first value being calculated as the sum of said mean density value and a specified value which is determined by the mean density value;
- a second judging step for judging on the basis of the computed mean density value and the digitized density value of the particular picture point whether or not said density value of the particular point is smaller than a second value, said second value being calculated as the difference between said mean density value and another specified value which is determined by the mean density value;
- a binarization step for binarizing the computed mean density value by the dither method;
- a first comparison step for comparing the judging result of the first judging step with binarized density data of picture points adjacently surrounding the particular picture point and generating a first binary output for said particular picture point according to the result of the first comparison step;
- a second comparison step for comparing the judging result of the second judging step with binarized density data of picture points adjacently surrounding the particular picture point and generating a second binary output according to the result of the second comparison step;
- a first combining step for AND-combining the binarized mean density value and the second output generated by said second comparison step; and
- a second combining step for OR-combining the combining result of said first combining step with the first binary output.

The picture signal binarization system is, according to the invention, characterized by mean density value operation means for computing the mean density value of a specified number of picture points in a predetermined range of an image around a particular picture point to be converted;
first determination means for receiving the computed mean density value and the digitized density value of the particular picture point and judging whether or not said density value of the particular picture point is larger than a first value which is calculated as the sum of said mean density value and a specified value determined by the mean density value;
second determination means for receiving the computed mean density value and the digitized density value of the particular picture point and judging whether or not the density value is smaller than a second value which is calculated as the difference between said mean density value and another specified value determined by the mean density value;
mean value binarization means for binarizing the mean density value by the dither method;
third determination means receiving the output of the first determination means and comparing binary data of a specified number of picture points having the target picture point as the center with the output of the first determination means corresponding to said particular point and generating a first output signal according to the comparison result; and
fourth determination means receiving the output of the second determination means and comparing binary data of a specified number of picture points having the target picture point as the center with the output of the second determination means corresponding to said particular point and generating a second output signal according to the comparison result; and
combining means for combining the first output signal generated by the third determination means with the second output signal generated by the fourth determination means and the binarized mean density value.

### Brief Description of the Drawings

The present invention will become more fully understood from the detailed description given hereinbelow and the accompanying drawing which is given by way of illustration only, and thus are not limitative of the present invention and wherein:

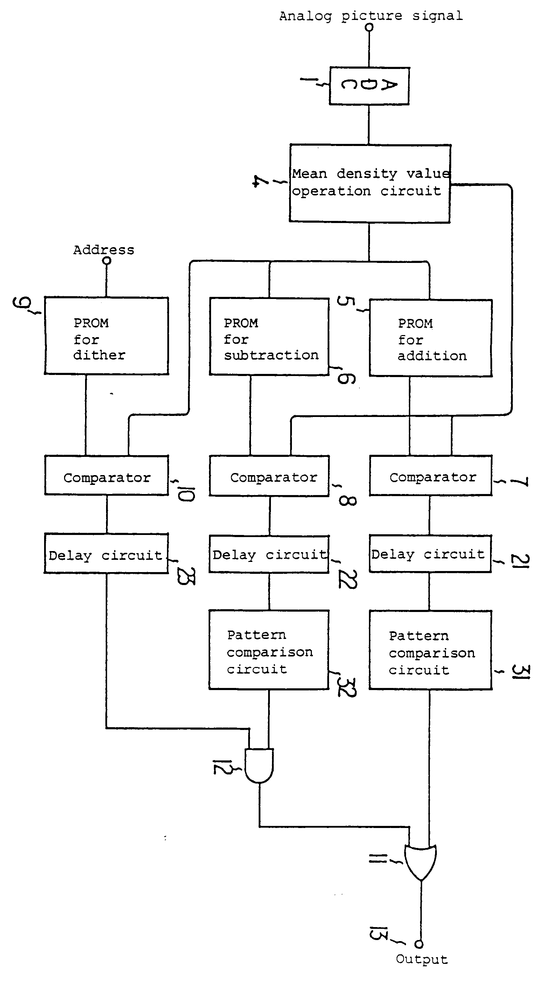

Figure 1 is a block diagram showing the basic configuration of an embodiment of the present invention.

### Description of the Preferred Embodiment

The picture signal binarization system of a preferred embodiment of the present invention is described in the following with reference to the accompanying drawings.

An A/D converter 1 converts the analog picture signals in a specified range of an image to eight-bit digital data. The value of the digital data thus converted becomes larger as the density of the image increases.

A mean density value operation circuit 4 computes the mean density value of the specified 8 × 8 points on the image from the digital data for the 8 × 8 points. Receiving the mean density value output as an address data from the mean density value operation circuit 4, a PROM for addition 5 outputs the sum of the mean density value and a specified value "A" determined by the mean density value. Receiving the mean density value output as an address data from the mean density value operation circuit 4, a PROM for subtraction 6 outputs a value which is smaller than the mean density value by a specified value "B" determined by the mean density value.

A comparator 7 compares the data output from the PROM for addition 5 with the reference data located virtually in the center of the digital data for the 8 × 8 points output from the mean density value operation circuit 4. The comparator 7 outputs "O" when the reference data output from the mean density value operation circuit 4 is smaller than the data output from the PROM for addition 5, and outputs "1" when the former is larger than the latter. A comparator 8 compares the data output from the PROM for subtraction 6 with the reference data output from the mean density value operation circuit 4. The comparator 8 outputs "O" when the reference data from the mean density value operation circuit 4 is smaller than the data output from the PROM for subtraction 6, and outputs "1" when the former is larger than the latter.

A PROM for dither 9 uses two bits of an address data given, for selecting the dither type, and the remaining six bits for selecting one of the 8 × 8 dither patterns. A comparator 10 compares the data output from the PROM for dither 9 with the mean density value output from the mean density value operation circuit 4, and outputs the mean density data binarized by the dither method.

A delay circuit 21 delays the data output from the comparator 7 and outputs data corresponding to the 3 × 3 points with the target point to be binarized as the center. When the central data of the 3 × 3 data output from the delay circuit 21 is "1" and at least one of the eight data for the surrounding eight points is "1", a pattern comparison circuit 31 outputs "1".

A delay circuit 22 delays the data output from the comparator 8 and outputs data corresponding to the 3 × 3 points with the target point to be binarized as the center. When the central data of the 3 × 3 data output from the delay circuit 22 is "O" and at least one of the eight data for the surrounding eight points is "O", a pattern comparison circuit 32 outputs "O".

A delay circuit 23 delays the output from the comparator 10, and outputs data corresponding to the point to be binarized.

The output of the pattern comparison circuit 31 is input to an OR circuit 11. The output of the pattern comparison circuit 32 and the output of the delay circuit 23 are input to an AND circuit 12. The output of the AND circuit 12 is input to the OR circuit 11, and the output of the OR circuit 11 to a terminal 13 of the picture signal binarization system.

Supposing the density value of the target point to be binarized is larger than the sum of the mean density value of the surrounding points and the specified value "A", the comparator 7 outputs "1". If output data for any one of the surrounding eight points is also "1", the pattern comparison circuit 31 outputs "1" and consequently the output to the terminal 13 is "1". In contrast, when the density value of the target point is smaller than a value obtained by subtracting the specified value "B" from the mean density value of the surrounding points, the comparators 7 and 8 output "O" and the pattern comparison circuit 31 outputs "O". If output data for any one of the surrounding eight points is also "O", the pattern comparison circuit 32 outputs "O" and consequently "O" is output to the terminal 13. Therefore, for a two-tone image such as characters in which the density of a particular point to be binarized differs largely from the mean density of the surrounding points, either "1" or "O" is forcedly output to the terminal 13.

When "1" or "O" is forcedly output, the pattern comparison circuits 31 and 32 use the dither method to reproduce a noise-free binary image.

If the density value of the target point to be binarized is smaller than the sum of the mean density value of the surrounding points and the specified value "A" but larger than the value obtained by subtracting the specified value "B" from the mean density value of the surrounding points, the comparator 7 outputs "O" and the comparator 8 outputs "1". Then the mean density value output from the comparator 10 is binarized by the dither method and output through the delay circuit 23, the AND circuit 12 and the OR circuit 11 to the terminal 13. In other words, for a multi-tone image such as a photograph in which the density value of a particular point to be binarized is close to the mean density value of the surrounding points, a binary data depending upon the mean density value is output to the terminal 13.

In the above embodiment of the invention, the pattern comparison circuits 31 and 32 are designed to eliminate noise from one point. The construction of the circuits 31 and 32 may be changed to reproduce a noise-free image by replacing the pattern according to the image.

Further, this embodiment is based on comparison of 3 × 3 digital data patterns. Alternatively, larger pattern may be used for comparison, which permits more effective noise elimination. According to the present invention, as described above, when the density of a particular point to be binarized is substantially different from the mean density of the surrounding points, binary data of "1" or "0" is output forcedly. for the particular point according to the comparison result of which density is larger. When the density of a particular point to be binarized is close to the mean density of the surrounding points, a binary data according to the mean density value is output. Therefore, even if a image to be reproduced is a mixture of the two-tone image such as characters and the multi-tone image such as photographs, both two-tone image and multi-tone image can be binarized accurately. Since mean density value is used in processing by the dither method, even a mesh image does not cause moire pattern.

Moreover, even if an original image contains a large amount of noise, the system eliminates noise from one by one point, and uses the mean value of the 8 × 8 digital data for the dither method, thereby reproducing a noise-free image.

In the above description of the present invention, the specified value "A" may be the same as or different from the specified value "B".

## Claims

1. A method of binarizing a picture signal for converting a digitized density value of an analog image signal into a binarized picture signal of accurate grey levels, said method comprising a step of converting both multiple-tone portions and two tone-portions of an image, characterized by following steps:
- computing the mean density value of a specified number of picture points in a predetermined range of an image around a particular picture point to be converted;
- a first judging step for judging on the basis of the computed mean density value and the digitized density value of the particular picture point whether or not said density value of the particular picture point is larger than a first value, said first value being calculated as the sum of said mean density value and a specified value (A) which is determined by the mean density value;
- a second judging step for judging on the basis of the computed mean density value and the digitized density value of the particular picture point whether or not said density value of the particular point is smaller than a second value, said second value being calculated as the difference between said mean density value and another specified value (B) which is determined by the mean density value;
- a binarization step for binarizing the computed mean density value by the dither method;
- a first comparison step for comparing the judging result of the first judging step with binarized density data of picture points adjacently surrounding the particular picture point and generating a first binary output for said particular picture point according to the result of the first comparison step;
- a second comparison step for comparing the judging result of the second judging step with binarized density data of picture points adjacently surrounding the particular picture point and generating a second binary output according to the result of the second comparison step;
- a first combining step for AND-combining the binarized mean density value and the second output generated by said second comparison step; and
- a second combining step for OR-combining the combining result of said first combining step with the first binary output.

2. A picture signal binarization system for converting a digitized density value of an analog image signal into binary picture signals of accurate grey levels, said system comprising means for converting both multiple-tone portions and two-tone portions of an image, characterized by mean density value operation means (4) for computing the mean density value of a specified number of picture points in a predetermined range of an image around a particular picture point to be converted;
first determination means (5, 7) for receiving the computed mean density value and the digitized density value of the particular picture point and judging whether or not said density value of the particular picture point is larger than a first value which is calculated as the sum of said mean density value and a specified value (A) determined by the mean density value;
second determination means (6, 8) for receiving the computed mean density value and the digitized density value of the particular picture point and judging whether or not the density value is smaller than a second value which is calculated as the difference between said mean density value and another specified value (B) determined by the mean density value; mean value binarization means (9, 10) for binarizing the mean density value by the dither method; third determination means (31) receiving the output of the first determination means (5, 7) and comparing binary data of a specified number of picture points having the target picture point as the center with the output of the first determination means (5, 7) corresponding to said particular point and generating a first output signal according to the comparison result; and
fourth determination means (32) receiving the output of the second determination means (6, 8) and comparing binary data of a specified number of picture points having the target picture point as the center with the output of the second determination means (6, 8) corresponding to said particular point and generating a second output signal according to the comparison result; and
combining means for combining the first output signal generated by the third determination means with the second output signal generated by the fourth determination means and the binarized mean density value.

3. The picture signal binarization system of claim 2, wherein said combining means comprises:
an AND gate (12) for computing an AND between the output of the mean value binarization means (9,10,23) and the second output signal, and
an OR gate (11) for computing an OR (31) between the first output signal and the output of the AND gate (12).

## Patentansprüche

1. Bildsignal-Binarisierungsverfahren, das einen digitalisierten Dichtewert eines Analogbildsignals in ein binarisiertes Bildsignal mit genauen Graustufen umsetzt, wobei das Verfahren einen Schritt umfaßt, um sowohl Mehrtonbereiche als auch Zweitonbereiche eines Bildes umzuwandeln,
gekennzeichet durch die Schritte:
Berechnen des mittleren Dichtewertes einer spezifizierten Anzahl von Bildpunkten in einem vorbestimmten Bereich eines Bildes um einen einzelnen umzuwandelnden Bildpunkt herum;
einen ersten Entscheidungsschritt, um auf der Basis des berechneten mittleren Dichtewertes und des digitalisierten Dichtewertes des einzelnen Bildpunktes zu entscheiden, ob der Dichtewert des einzelnen Bildpunktes größer als ein erster Wert ist, wobei dieser erste Wert als die Summe des mittleren Dichtewertes und eines spezifizierten Wertes (A) berechnet wird, der durch den mittleren Dichtewert bestimmt wird;
einen zweiten Entscheidungsschritt, um auf der Basis des berechneten mittleren Dichtewertes und des digitalisierten Dichtewertes des einzelnen Bildpunktes zu entscheiden, ob der Dichtewert des einzelnen Bildpunktes kleiner als ein zweiter Wert ist, wobei dieser zweite Wert als die Differenz zwischen dem mittleren Dichtewert und einem weiteren spezifizierten Wert (B) berechnet wird, der durch die mittlere Dichte bestimmt wird;
einen Binarisierungsschritt, um den berechneten mittleren Dichtewert durch das Dither-Verfahren zu binarisieren;
einen ersten Vergleichsschritt, um das Entscheidungsergebnis des ersten Entscheidungsschrittes mit binarisierten Dichtedaten von Bildpunkten zu vergleichen, die den einzelnen Bildpunkt angrenzend umgeben, und um einen ersten binären Ausgang für den einzelnen Bildpunkt nach Maßgabe des Ergebnisses des ersten Vergleichsschrittes zu erzeugen;
einen zweiten Vergleichsschritt, um das Entscheidungsergebnis des zweiten Entscheidungsschrittes mit binarisierten Dichtedaten von Bildpunkten zu vergleichen, die den einzelnen Bildpunkt angrenzend umgeben, und um einen zweiten binären Ausgang nach Maßgabe des Ergebnisses des zweiten Vergleichsschrittes zu erzeugen;
einen ersten Verknüpfungsschritt zur UND-Verknüpfung des binarisierten mittleren Dichtewertes und des von dem zweiten Vergleichsschritt erzeugten zweiten Ausgangs, und
einen zweiten Verknüpfungsschritt zur ODER-Verknüpfung des Verknüpfungsergebnisses des ersten Verknüpfungsschrittes mit dem ersten binären Ausgang.

2. Bildsignal-Binarisierungssystem, das einen digitalisierten Dichtewert eines Analogbildsignals in binäre Bildsignale mit genauen Graustufen umsetzt, wobei das System Einrichtungen umfaßt, um sowohl Mehrtonbereiche als auch Zweitonbereiche eines Bildes umzuwandeln,
gekennzeichnet durch eine Durchschnittsdichtewert-Operationseinrichtung (4), die den mittleren Dichtewert einer spezifizierten Anzahl von Bildpunkten in einem vorbestimmten Bereich eines Bildes um einen einzelnen unzuwandelnden Bildpunkt herum berechnet;
eine erste Entscheidungseinrichtung (5, 7), die den berechneten mittleren Dichtewert und den digitalisierten Dichtewert des einzelnen Bildpunktes empfängt und entscheidet, ob der Dichtewert des einzelnen Bildpunktes größer als ein erster Wert ist, der als die Summe des mittleren Dichtewertes und eines spezifizierten Wertes (B) berechnet wird, der von dem mittleren Dichtewert bestimmt wird;
eine zweite Entscheidungseinrichtung (6, 8), die den berechneten mittleren Dichtewert und den digitalisierten Dichtewert des einzelnen Bildpunktes empfängt und entscheidet, ob der Dichtewert kleiner als ein zweiter Wert ist, der als die Differenz zwischen dem mittleren Dichtewert und einem weiteren spezifizierten Wert (B) berechnet wird, der von dem mittleren Dichtewert bestimmt wird;
eine Mittelwert-Binarisierungseinrichtung (9, 10), die den mittleren Dichtewert nach dem Dither-Verfahren binarisiert;
eine dritte Entscheidungseinrichtung (31), die den Ausgang der ersten Entscheidungseinrichtung (5, 7) empfängt und Binärdaten einer spezifizierten Anzahl von Bildpunkten mit dem Zielbildpunkt als Mitte mit dem Ausgang der ersten Entscheidungseinrichtung (5, 7) entsprechend dem einzelnen Bildpunkt vergleicht und ein erstes Ausgangssignal nach Maßgabe des Vergleichsergebnisses erzeugt, und
eine vierte Entscheidungseinrichtung (32), die den Ausgang der zweiten Entscheidungseinrichtung (6, 8) empfängt und Binärdaten einer spezifizierten Anzahl von Bildpunkten mit dem Zielbildpunkt als Mitte mit dem Ausgang der zweiten Entscheidungseinrichtung (6, 8) entsprechend dem einzelnen Bildpunkt vergleicht und ein zweites Ausgangssignal nach Maßgabe des Vergleichsergebnisses erzeugt, und
eine Verknüpfungseinrichtung, die das von der dritten Entscheidungseinrichtung erzeugte erste Ausgangssignal mit dem von der vierten Entscheidungseinrichtung erzeugten zweiten Ausgangssignal und dem binarisierten mittleren Dichtewert verknüpft.

3. Bildsignal-Binarisierungssystem nach Anspruch 2, bei dem die Verknüpfungseinrichtung umfaßt:
ein UND-Gatter (12), um eine UND-Verknüpfung zwischen dem Ausgang der Mittelwert-Binarisierungseinrichtung (9, 10, 23) und dem zweiten Ausgangssignal zu berechnen, und
ein ODER-Gatter (11), um eine ODER-Verknüpfung (31) zwischen dem ersten Ausgangssignal und dem Ausgang des UND-Gatters (12) zu berechnen.

## Revendications

1. Procédé de binarisation d'un signal d'image pour convertir une valeur de densité numérisée d'un signal d'image analogique en un signal d'image binarisé de niveaux de gris précis, ledit procédé comportant une étape de conversion à la fois de parties à teintes multiples et de parties en deux teintes d'une image, caractérisé par les étapes suivantes :
- calculer la valeur de densité moyenne d'un nombre spécifié de points d'image dans une plage prédéterminée d'une image autour d'un point d'image particulier à convertir;
- une première étape d'évaluation pour évaluer en fonction de la valeur de densité moyenne calculée et de la valeur de densité numérisée du point d'image particulier si oui ou non ladite valeur de densité du point d'image particulier est supérieure à une première valeur, ladite première valeur étant calculée en tant que somme de ladite valeur de densité moyenne et d'une valeur spécifiée (A) qui est déterminée par la valeur de densité moyenne ;
- une seconde étape d'évaluation pour évaluer en fonction de la valeur de densité moyenne calculée et de la valeur de densité numérisée du point d'image particulier si oui ou non ladite valeur de densité du point particulier est inférieure à une seconde valeur, ladite seconde valeur étant calculée en tant que différence entre ladite valeur de densité moyenne et une autre valeur spécifiée (B) qui est déterminée par la valeur de densité moyenne ;
- une étape de binarisation pour binariser la valeur de densité moyenne calculée par le procédé de juxtaposition;
- une première étape de comparaison pour comparer le résultat d'évaluation de la première étape d'évaluation aux données de densité binarisées de points d'image entourant de façon adjacente le point d'image particulier et produire un premier signal binaire de sortie pour ledit point d'image particulier selon le résultat de la première étape de comparaison ;
- une seconde étape de comparaison pour comparer le résultat d'évaluation de la seconde étape d'évaluation aux données de densité binarisées de points d'image entourant de façon adjacente le point d'image particulier et produire un second signal de sortie binaire selon le résultat de la seconde étape de comparaison ;
- une première étape de combinaison pour combiner par intersection logique la valeur de densité moyenne binarisée et le second signal de sortie produit par ladite seconde étape de comparaison ; et
- une seconde étape de combinaison pour combiner par réunion logique le résultat de combinaison de ladite première étape de combinaison audit premier signal de sortie binaire.

2. Système de binarisation d'un signal d'image pour convertir une valeur de densité numérisée d'un signal d'image analogique en des signaux d'image binaires de niveaux de gris précis, ledit système comportant des moyens pour convertir à la fois des parties à teintes multiples et des parties à deux teintes d'une image, caractérisé par des moyens de calcul de la valeur de densité moyenne (4) pour calculer la valeur de densité moyenne d'un nombre spécifié de points d'image, dans une plage prédéterminée d'une image autour d'un point d'image particulier à convertir ;
des premiers moyens de détermination (5, 7) pour recevoir la valeur de densité moyenne calculée et la valeur de densité numérisée du point d'image particulier et évaluer si oui ou non ladite valeur de densité du point d'image particulier est supérieure à une première valeur qui est calculée en tant que somme de ladite valeur de densité moyenne et d'une valeur spécifiée (A) déterminée par la valeur de densité moyenne ;
des seconds moyens de détermination (6, 8) pour recevoir la valeur de densité moyenne calculée et la valeur de densité numérisée du point d'image particulier et évaluer si oui ou non la valeur de densité est inférieure à une seconde valeur qui est calculée en tant que différence entre ladite valeur de densité moyenne et une autre valeur spécifiée (B) déterminée par la valeur de densité moyenne; des moyens de binarisation de valeur moyenne (9, 10) pour binariser la valeur de densité moyenne par le procédé de juxtaposition ;
des troisièmes moyens de détermination (31) recevant le signal de sortie des premiers moyens de détermination (5, 7) et comparant les données binaires d'un nombre spécifié de points d'image ayant le point d'image cible en tant que centre au signal de sortie des premiers moyens de détermination (5, 7) correspondant audit point particulier et produisant un premier signal de sortie selon le résultat de la comparaison ; et
des quatrièmes moyens de détermination (32) recevant le signal de sortie des seconds moyens de détermination (6, 8) et comparant des données binaires d'un nombre spécifié de points d'image ayant le point d'image cible en tant que centre au signal de sortie des seconds moyens de détermination (6, 8) correspondant audit point particulier et produisant un second signal de sortie selon le résultat de la comparaison ; et
des moyens de combinaison pour combiner le premier signal de sortie produit par les troisièmes moyens de détermination au second signal de sortie produit par les quatrièmes moyens de détermination et la valeur de densité moyenne binarisée.

3. Système de binarisation de signal d'image selon la revendication 2, dans lequel lesdits moyens de combinaison comportent :
une porte ET (12) pour calculer une intersection logique entre le signal de sortie des moyens de binarisation de valeur moyenne (9, 10, 23) et le second signal de sortie, et
une porte OU (11) pour calculer une réunion logique (31) entre le premier signal de sortie et le signal de sortie de la porte ET (12).
